Europäisches Patentamt

**European Patent Office**

**Office européen des brevets**

(19)

(11) Veröffentlichungsnummer: **0 120 987**
**B1**

(12)

# EUROPÄISCHE PATENTSCHRIFT

(45) Veröffentlichungstag der Patentschrift:
**05.11.86**

(51) Int. Cl.⁴: **F 16 J 15/32**

(21) Anmeldenummer: **83107997.5**

(22) Anmeldetag: **12.08.83**

(54) Dichtring.

(30) Priorität: **03.03.83 DE 3307470**

(43) Veröffentlichungstag der Anmeldung:
**10.10.84 Patentblatt 84/41**

(45) Bekanntmachung des Hinweises auf die Patenterteilung:
**05.11.86 Patentblatt 86/45**

(84) Benannte Vertragsstaaten:
**AT BE CH DE FR GB IT LI LU NL SE**

(56) Entgegenhaltungen:
**FR-A-1 088 751**
**US-A-2 181 203**
**US-A-2 482 029**
**US-A-2 743 950**

(73) Patentinhaber: **Firma Carl Freudenberg, Höhnerweg 4, D-6940 Weinheim/Bergstrasse (DE)**

(72) Erfinder: **Ehrmann, Peter, Regerstrasse 11, D-6944 Hemsbach (DE)**

(74) Vertreter: **Weissenfeld- Richters, Helga, Dr., Höhnerweg 2, D-6940 Weinheim/Bergstrasse (DE)**

EP 0 120 987 B1

## Beschreibung

Die Erfindung betrifft einen Dichtring für ein hin- und hergehendes und/ader Drehbewegungen ausführendes Maschinenteil, bestehend aus einem Lippenring aus nachgiebigem Werkstoff und mit einer Stützfläche, sowie einem im Bereich der Stützfläche mit dem Lippenring verbundenen Zwischenring zur Anbindung an den Versteifungsring, wobei der Zwischenring durch ein S-förmig gekrümmtes Profil, das zumindest in einem Teilbereich annähernd axial verläuft, eine radiale Verlagerung des Lippenringes zuläßt und senkrecht zur Rotationsachse in den Lippenring und den Versteifungsring mündet.

Ein Dichtring der vorgenannten Art wird in der US-A-24 52 029 gezeigt. Der Zwischenring ist dabei an den einander gegenüberliegenden, axialen Enden einerseits des Lippenringes und andererseits des Versteifungsringes festgelegt. Radiale Wellenverlagerungen haben das Auftreten eines Kippmomentes in dem Lippenring zur Folge, was das erzielte Abdichtungsergebnis negativ beeinflußt.

Eine weitere Dichtung dieser Art wird in der US-A- 21 81 203 gezeigt. Der Zwischenring hat dabei ein doppel-S-förmiges Profil, welches mittig an einander radial umschließenden Zonen des Lippen- und des Versteifungsringes festgelegt ist. Auch bei dieser Ausführung sind häufig relative Verlagerungen des Lippenringes zu beobachten, was nicht erwünscht ist.

Der Erfindung liegt die Aufgabe zugrunde, einen Dichtring der eingangs genannten Art derart weiterzuentwickeln, daß auch bei Auftreten starker radialer Verlagerungen des abgedichteten Maschinenteiles axiale Verlagerungen der Dichtlippe sowie Verdnderungen der von der Dichtlippe auf die Gegenfläche ausgeübten Anpreßkräfte sicher vermieden werden. Bei Ausführungsformen, bei denen die Dichtlippe durch zwei einander durchschneidende Querflächen gebildet wird, sollen die von den Kegelflächen und der abgedichteten Oberfläche eingeschlossenen Winkel auch bei einer radialen Verlagerung des abgedichteten Maschinenteiles im wesentlichen unverändert beibehalten werden.

Zur Lösung dieser Aufgabe wird gemäß vorliegender Erfindung ein Dichtring vorgeschlagen, der die kennzeichnenden Merkmale des Patentanspruches aufweist. Auf vorteilhafte Ausgestaltungen nehmen die Unteransprüche Bezug.

Die vorgeschlagene Ausführung geht aus von der Erkenntnis, daß sich die Wandstärke des Zwischenringes unter Berücksichtigung der praxisüblichen Bedingungen nicht beliebig vermindern läßt. Neben dem bei Wellendichtringen über die Dichtlippe eingeleiteten Drehmoment müssen die aus der Montage resultierenden Belastungen aufgefangen werden sowie der Druck des abzudichtenden Mediums. Die Wandstärke kann daher ein gewisses Mindestmaß nicht unterschreiten, was eine an sich nicht erwünschte, große Steifigkeit zur Folge hat.

Bei der erfindungsgemäß vorgeschlagenen Ausführung liegt diese Problematik ebenfalls vor, sie ist aber ohne nachteilige Folgen in bezug auf das erzielte Betriebsverhalten insofern, als die Einleitung eines Kippmomentes beim Auftreten radialer Verlagerungen des abgedichteten Maschinenelementes vermieden wird. An der Dichtlippe sind dadurch stets gleichbleibende Bedingungen gewährleistet, was ein gutes Abdichtungsergebnis über lange Zeiträume ermöglicht.

Auch nennenswerte axiale Verlagerungen der Dichtlippe treten beim Auftreten radialer Verlagerungen des abgedichteten Maschinenelementes nicht auf, weil der Zwischenring sich zumindest in einem Teilbereich annähernd achsparallel erstreckt. Abweichungen von + 15a sind ohne weiteres zulässig.

Die exakte Befestigungsposition des Zwischenringes an dem Versteifungsring ist abhängig von der speziellen Ausbildung des Lippenringes. Ausführungen, die für die Abdichtung höherer Drücke bestimmt sind, sind in sich relativ steif und unflexibel ausgebildet, und der Zwischenring soll in diesem Falle axial innerhalb der von der Stützfläche und der Dichtlippe umschlossenen Erstreckung an dem Versteifungsring befestigt sein, bevorzugt mittig. In Fällen, in denen der Lippenring in sich flexibel ausgebildet ist, und beispielsweise eine Dichtlippe aufweist, die durch ein Gelenk mit dem eigentlichen Lippenring verbunden ist, empfiehlt sich demgegenüber eine Befestigung des Zwischenringes an dem Versteifungsring axial innerhalb der von der Stützfläche umschlossenen Erstreckung, vorzugsweise auch in diesem Fall mittig. Geringfügige Abweichungen sind ohne weiteres zulässig.

Eine beispielhafte Ausführung des vorgeschlagenen Dichtringes ist in der als Anlage beigefügten Zeichnung wiedergegeben. Sie wird nachfolgend näher erläutert:

Der in halbgeschnittener Darstellung wiedergegebene Dichtring besteht aus dem Versteifungsring 1 und dem durch den membranartig ausgebildeten Zwischenring 3 damit verbundenen Lippenring 4. Der Versteifungsring 1 enthält eine Versteifungseinlage 2 aus einem zylindrischen Rohrabschnitt. Er ist dadurch in radialer Richtung unnachgiebig und wird durch die die Verstärkungseinlage 2 auf der Außenseite umhüllende Gummischlauch gegenüber der aufnehmenden Gehdusebohrung nach der Montage statisch abgedichtet.

Der Lippenring weist eine Dichtlippe 6 auf, die durch zwei einander durchschneidende Kegelflächen gebildet wird. Er ist in sich in axialer Richtung unnachgiebig ausgeführt, und dadurch für die Abdichtung eines unter höherem Druck stehenden Mediums geeignet.

An dem von der Dichtlippe 6 abgewandten Ende weist der Lippenring die Stützfläche 5 auf, die die abgedichtete Welle in geringem Abstand umgibt. Beim Auftreten radialer Wellenverlagerungen kommt es zu einer gegenseitigen Berührung zwischen der Stützfläche und der Welle, und der Lippenring wird dadurch unter elastischer Verformung des Zwischenringes 3 entsprechend verlagert.

Der Zwischenring 3 hat nur eine sehr geringe Wandstärke, und er zeichnet sich dadurch durch eine große Flexibilität und Nachgiebigkeit aus. Er hat eine S-förmig gekrümmte Gestalt, die senkrecht zur Rotationsachse in den Lippenring und den Versteifungsring mündet sowie überwiegend eine Erstreckung, die mit der Rotationsachse einen Winkel von 15° einschließt. Die Befestigungsposition des Zwischenringes an dem Versteifungsring in axialer Richtung halbiert etwa die von der Stützfläche 5 und der Dichtlippe 6 umschlossene Erstreckung des Lippenringes 4.

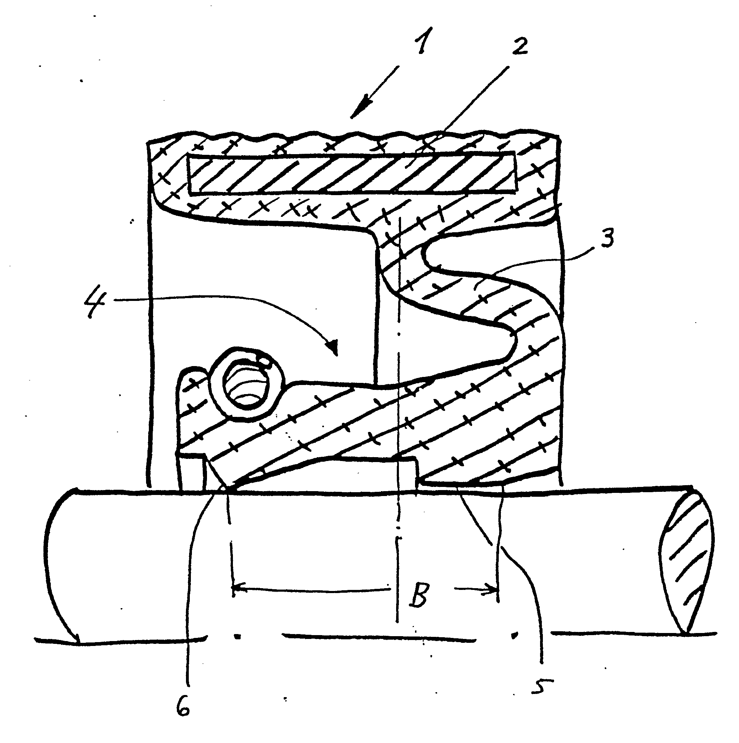

**Patentansprüche**

1. Dichtring für ein hin- und hergehendes und/oder Drehbewegungen ausführendes Maschinenteil, bestehend aus einem Lippenring (4) aus nachgiebigem Werkstoff und mit einer Stützfläche (5), einem im Bereich der Stützfläche mit dem Lippenring verbundenen Zwischenring (3) zur Anbindung an den Versteifungsring (1), wobei der Zwischenring (3) durch ein S-förmig gekrümmtes Profil, das zumindest in einem Teilbereich annähernd achsparallel verläuft eine radiale Verlagerung des Lippenringes (4) zuläßt und senkrecht zur Rotationsachse in den Lippenring (4) und den Versteifungsring (1) mündet, dadurch gekennzeichnet, daß der Zwischenring (3) innerhalb der von der Dichtlippe (6) und der Stüzfläche (5) axial umschlossenen Erstreckung an dem Versteifungsring (1) festgelegt ist.

2. Dichtring nach Anspruch 1, dadurch gekennzeichnet, daß der Zwischenring (3) bei im wesentlichen unveränderlicher Zuordnung der Dichtlippe (6) zu dem Lippenring (4) etwa mittig zwischen der von Stützfläche (5) und Dichtlippe (6) umschlossenen, axialer Erstreckung mit dem Versteifungsring (1) verbunden ist.

3. Dichtring nach Anspruch 1, dadurch gekennzeichnet, daß der Zwischenring (3) bei einer gelenkigen Verbindung zwischen der Dichtlippe (6) und dem Lippenring (4) etwa mittig innerhalb der von der Stützfläche (5) umschlossenen, axialen Erstreckung mit dem Versteifungsring (1) verbunden ist.

**Claims**

1. A seal ring for a reciprocating machine part and/or a machine part executing rotational movements, comprising a lip ring (4) of pliable material having a supporting face (5) and an intermediate ring (3) connected to the lip ring in the area of the supporting face for securing to the stiffening ring (1), the intermediate ring (3) permitting a radial displacement of the lip ring (4) as a result of a section bent in an S-shape which runs approximately parallel to the axis at least in a partial area and the intermediate ring (3) also merging into the lip ring (4) and the stiffening ring (1) perpendicularly to the axis of rotation, characterized in that the intermediate ring (3) is joined to the stiffening ring (1) within the region axially bounded by the seal lip (6) and the supporting face (5).

2. A seal ring according to claim 1, characterized in that, the seal lip (6) is essentially in invariable relationship with the lip and ring (4) the intermediate ring (3) is joined to the stiffening ring (1) approximately centrally between the axial bounds of the region axially bounded by the supporting face (5) and the seal lip (6).

3. A seal ring according to claim 1, characterized in that there is a linüed connection between the seal lip (6) and the lip ring (4) and the intermediate ring (3) is joined to the stiffening ring (1) approximately centrally within the region axially bounded by the supporting face (5).

**Revendications**

1. Bague d'étanchéité pour pièce de machine exécutant un mouvement alternatif et/ou un mouvement de rotation, constituée d'une bague à lèvre (4) en matériau élastique et avec une surface d'appui (5), d'une bague intermédiaire (3) reliée à la bague à lèvre dans la zone de la surface d'appui, en vue de la fixation sur la bague raidisseuse (1), la bague intermédiaire (3) permettant un déplacement radial de la bague à lèvre (4) grâce à un profil cintré en "S" qui s'étend, au moins partiellement, en direction à peu près parallèle à l'axe et qui débouche perpendiculairement à l'axe de rotation dans la bague à lèvre (4) et la bague raidisseuse (1), caractérisée en ce que la bague intermédiaire (3) est fixée à la bague raidisseuse (1) à l'intérieur du prolongement entouré axialement par la lèvre d'étanchéité (6) et la surface d'appui (5).

2. Bague d'étanchéité selon la revendication 1, caractérisée en ce que la bague intermédiaire (3) est reliée à la bague raidisseuse (1) avec une disposition essentiellement inchangée de la lèvre d'étanchéité (6) par rapport à la bague à lèvre (4), à peu près au milieu entre le prolongement axial entouré par la surface d'appui (5) de la lèvre d'étanchéité (6).

3. Bague d'etanchéitè selon la revendication 1, caractérisée en ce que la bague intermédiaire (3) est reliée à la bague raidisseuse (1), en cas de liaison articulee entre la lèvre d'étanchéité (6) et la bague à lèvre (4), environ au milieu à l'intérieur du prolongemeht axial entouré par la surface d'appui (5).